# EUROPEAN PATENT SPECIFICATION

(11) **EP 0 672 442 B1**
(45) Date of publication and mention of the grant of the patent: **12.09.2001**
(21) Application number: 95201127.8
(22) Date of filing: 03.02.1989
(51) Int. Cl.: B01D 25/26

(54) **Sealing disk for filter cell and cell-type filter cartridge**
Dichtungsscheibe für Filterzelle und Ringscheiben-Filterpatrone
Bague d'étanchéité pour cellule filtrante et cartouche filtrante du type cellulaire

(30) Priority: 03.02.1988 US 151853
(43) Date of publication of application: 20.09.1995
(62) Divisional of application: 89301094.2
(73) Proprietor: Cuno Incorporated, Meriden Connecticut 06450 (US)
(72) Inventor: Artinyan, Arto, Southington, Connecticut 06489 (US); Krzyston, John, Guilford, Connecticut 06437 (US)
(74) Representative: Gillam, Francis Cyril

(56) References cited:
- EP-A- 0 233 999
- EP-A- 0 284 404
- GB-A- 2 185 696

## Description

The present invention relates to a sealing disk for use in a filter cell, and to a filter cell cartridge using such a sealing disk.

Cell-type filter cartridges have long been used and are being increasingly used in a variety of situations. Such filter cartridges are typically fabricated from individual cells generally having two layers of filter media separated from each other. Liquid typically flows from the outside of the filter medium towards the central portion of the cell. A significant advantage of cell-type filter cartridges is that the surface area of filter material is quite large when compared to the total volume of an assembled cell-type filter cartridge.

Disposed between each filter medium is a separator which is typically formed in the shape of disks having ribs radially extending from the central aperture in a spoke-like pattern. In addition to separating the two layers of filter media, it provides for fluid flow from the filter media towards the central aperture of the filter media. An excellent example of a filter separator may be found in U.S. Application Serial No. 07/032,405. The separator disk described therein has stiffening members formed at the central aperture of the cell, which members are attached to a plurality of separating ribs thereby to provide a rigid box-like structure sufficient to impart substantial cantilever strength to the ribs. Further, one of the stiffening members is positioned proximate the ends of the separator ribs in order to act as a load-bearing surface to prevent media intrusion of the filtering medium and to prevent blocking the area of the flow path with the filter liquid. Accordingly, one distinct advantage in this type of separator is that during backwashing or reverse flow (i.e. fluid flow from the central aperture of the filter cell out towards the surface of the filter medium) damage to the filter media is minimised or ameliorated.

Filter cell cartridges use a variety of filter media for filtering many fluids. Examples of such media and uses may be found, for example, in U.S. -A-4,617,128; US-A-4,309,247; US-A-4,305,782; US-A-4,007,113; and US-A-4,007,114.

Use of a cell-type filter cartridge may be also found in US-A-4,361,486.

A process for manufacturing filter cells is described in US-A-4,347,208. In this patent, a filter cell cartridge is described which comprises a plurality of filter cells. Each of the filter cells is comprised of filter media having a conical separator therebetween with the periphery or edges of the filter cell being held together and sealed by an injection-moulded flange.

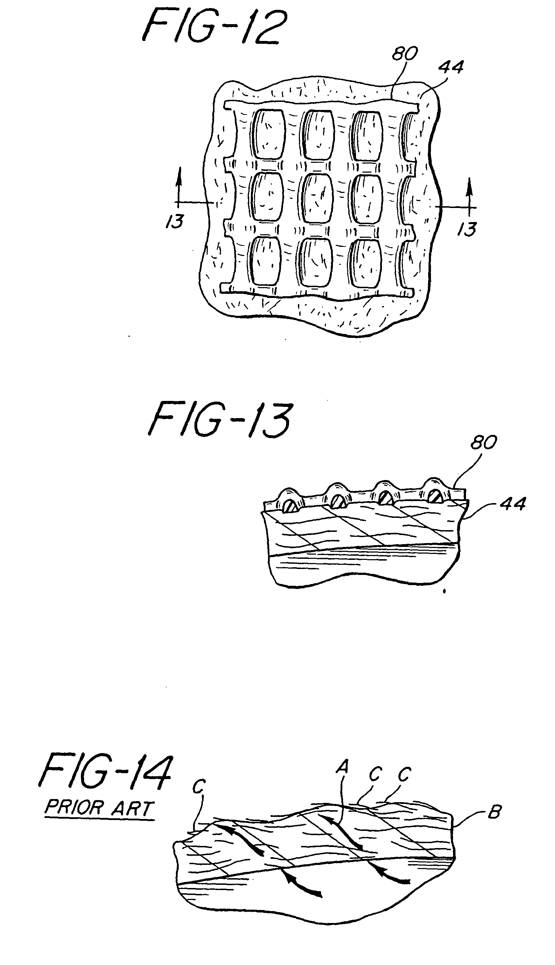

Generally, all of the aforedescribed filter cartridges perform satisfactorily for their intended purpose during normal operation conditions. However, due to the inherent labour and capital costs in replacing the filter cartridge, most applications utilise a backwash or reverse flow process in order to improve volumetric fluid flow therethrough and prolong the life of the cartridge. Obviously, the more backwashing operations that are permissible, the lower the total operating costs of the system. However, during backwashing operations, many filters, including filter cell-type cartridges, experience decreased tensile strength of the media, cracking of the edge seal, masking off of the media and/or flaking off of actual filter medium fibres. An illustration of this process is shown in Figure 14 herein (prior art) wherein fluid, designated A, backflowing through filter media B causes shredding or flaking of the cell medium and the production of frayed edges of particles C. Another problem with filter-cell type cartridges is that unintentional backpressure applied to the filter cell may cause cell rupture and/or distortion.

A number of attempts have been made throughout the years to strengthen filters and to control the flow of fluid therethrough by the use of lattice-type structures external to the actual filter medium. An early example of this may be found in US-A-445,223. This patent utilises a wire screen external to the filter media in order to prevent sagging of the filter media during use, the filter being partially held by the screen. This patent found this feature important since the filter itself used a charcoal paste adjacent a fibrous covering and was hence "limp".

A second example may be found in US-A-2,249,063.

This patent utilises a wire screen to provide structural support to the filter media under the high operating temperature and pressure utilised.

Another example may be found in US-A-2,263,853. This patent utilises a metal ribbon twisted about its longitudinal axis in order to support the filter media. Additionally, a supporting screen was utilised which is simultaneously welded at diametrically opposed points on the ribbon.

In US-A-4,274,964 a membrane-type hose in conjunction with an intermediate netting layer is used in an interlocking manner for the purpose of providing an improved flow pattern.

Accordingly the above mentioned patents use a support of one kind or another for the express purpose of providing a stiff filter support for the "limp" filter during use, i.e. the supports in effect form for filter elements which, by themselves, lack the appropriate physical properties. As such, the prior art braces or nets are used with filters specifically for the purpose of supporting the filter during forward fluid flow conditions as distinct from dealing with the problem of masking off, flaking off of actual filter media fibres, cracking at the edge seal and distortion caused by backwashing and backflow conditions and other related problems.

GB-A-2185696 discloses a spacer element for use within a filter cell and which is intended to hold separated the inner surfaces of the cell. The spacer element has a central hub which seals against the inner surfaces of the cell by having upstanding ribs.

The present invention provides a sealing disk intended for use on the external surfaces of a filter cell to effect a seal to the filter media, for a case where those external surfaces, exposed to the unfiltered fluid, have netting provided thereon to enhance the tensile strength of the filter media.

According to the present invention, there is provided a sealing disk for use with a filter cell having filter media defining an external unfiltered ;fluid surface and an internal surface of the cell, the filter media being self-supporting internally of the cell and having reinforcing netting means extending over the external surface of the filter media except for a central region of the cell, which sealing disk comprises a disk having at least one radial surface for engaging, in use, said external surface of the filter cell, an aperture disposed axially through the disk and a plurality of concentric sealing rings extending from the radial surface, the concentric rings being constructed and arranged sealingly to engage the external surface of the abutting filter media; which sealing disk is **characterised in that** the sealing disk further has a fastening ring also extending from the radial surface of the disk and concentrically disposed about the sealing rings, the fastening ring being spaced from the outer sealing ring with an annular part of the sealing disk extending in a radial plane between the outer sealing ring and the fastening ring, whereby in use the inner periphery of the netting means is located against the annular part and the fastening ring engages the radially inner region of the netting means to secure said inner region to the external surface of the filter cell.

The invention further extends to a filter cartridge comprising a plurality of filter cells arranged co-axially, each filter cell being defined by filter media having an unfiltered fluid external surface and an internal surface, and sealing means between adjacent filter cells and on the unfiltered fluid surfaces at the ends of the assembly of cells, each of which sealing means is in the form of a sealing disk having at least one radial surface for engaging radially-inner part of the external surface of the cell, there being an aperture axially disposed through the disk and the disk having a plurality of concentric sealing rings extending from the radial surface, the concentric rings being constructed and arranged sealingly to engage the external surface of abutting filter media; **characterised in that** the filter media is self supporting on the internal surfaces of the cell and reinforcing netting means extends over the external surface of the filter media of each cell except for a central region of the external surface; **and in that** the sealing disk includes a fastening ring also extending from the radial surface of the disk and concentrically disposed about the plurality of sealing rings, the fastening ring being constructed and arranged to engage the reinforcing netting means disposed on the filter media, to hold the radially inner region of the netting means and to secure said netting means to the external surface of the filter cell.

When constructing the filter cartridge, the sealing disk is compressed against the cell to secure the netting means to the cell and sealingly to engage the filter media.

The sealing disk of this invention is particularly adapted for use with a filter cell as claimed in our co-pending European Application No. 95 201125.2, divided out of our Application No. 89 301094.2 (EP-0327394-A). In such a cell, the coaction of the netting means with the filter medium increases the tensile strength of the medium when wet so that it can resist back pressure and/or backwashing, as well as providing other benefits.

There are known filter constructions using filter cells with external separators provided with sealing rings adapted to effect a seal to the filter media, for example from GB-A-2185 696 (referred to above) and EP-A-0233999. Neither of these documents address a filter cell having netting on the unfiltered fluid side of the filter medium, as discussed above, and the problem of sealing to such a cell.

In a preferred embodiment of the sealing ring, the disk has opposed radial surfaces. In this case, the plurality of concentric sealing rings and the fastening ring extend from each of the radial surfaces.

In the described arrangement, each of the sealing rings is continuous. Also, each of the sealing rings is triangularly-shaped in cross-section to form an engaging edge.

By way of example only, one specific embodiment of this invention will now be described in detail, reference being made to the accompanying drawings, in which:
Figure 1 is a perspective view of the filter cell cartridge assembly using a sealing ring of the present invention;
Figure 2 is a cross-section elevational view taken through Figure 1 along 2-2;
Figure 3 is an overview of the mesh-cutting guide utilised in the filter cell of Figure 1;
Figure 4 is a cross-sectional view taken through one of the blades shown in Figure 3;
Figure 5 is an illustrative view of a cut netting blank;
Figure 6 is a partially exploded view of the netting utilised adjacent the filter portion of a filter cell;
Figure 7 is a side elevational view showing an assembly of the individual components comprising a filter cell;
Figures 8 and 9 are cross-sectional views illustrating injection-moulding and the mould respectively of the sealed periphery of an individual filter cell;
Figures 10 and 11 illustrate an assembled filter cell and an assembled filter cell cartridge using a sealing ring of the present invention;
Figures 12 and 13 illustrate a plan and cross-sectional view respectively of the netting and filter media; and
Figure 14 shows typical filter media of prior art filter cell cartridges.

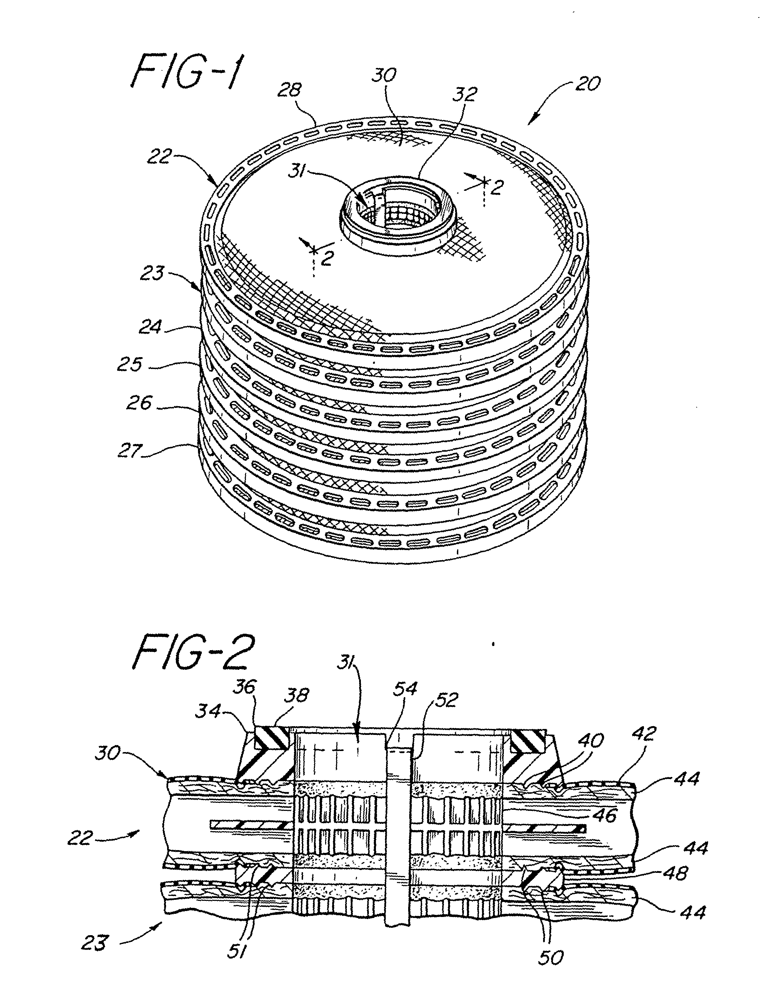

Referring now to Figure 1, there is shown a reinforced filter assembly 20 which is comprised of a plurality of cells 22-27, vertically stacked one upon the other. Disposed along the circumference of each filter cell is a moulded plastic edge 28 which is utilised to retain the various components of each individual cell together, as described more fully below. A relatively larger filtration area 30 is used for the introduction of unfiltered fluid (not shown) therethrough which exits through the centre aperture or core 31. Disposed at both ends of the assembly 20 is a retainer ring assembly 32. The entire filter assembly 20 is disposed inside a chamber (not shown) having an unfiltered inlet for the chamber and a filtered fluid outlet connected to one or both retainer ring assemblies 32.

Referring now to Figure 2, there is shown a cross-sectional view taken through a portion of the filter cell assembly shown in Figure 1. Retainer ring assembly 32 is comprised of an end fitting 34 having an annular slot 36 therein. Disposed in the annular slot 36 is a gasket 38 which coacts with an annular conduit (not shown) thereby preventing the migration of unfiltered fluid adjacent the filtration area 30 into the central aperture or core 31. A plurality of filter assemblies may be disposed inside a chamber in stacked relationship thereto, thereby allowing replacement of groups of filter assemblies (not shown). A plurality of annular ribs 40 are disposed on the underside of end fitting 34 and provide a fluid-tight fitting between the end fitting 34 and the surface of the filtration area 30, while holding and retaining mesh 42 thereon. Optionally, the mesh 42 may be sealed, e.g. ultrasonically welded, to end fitting 34.

Still referring to Figure 2, filter cell 22,24 is comprised of netting 42 disposed on the outer surfaces thereof. The netting is preferably a mesh of the desired thickness and mesh size sufficient to withstand the forward and backward fluid flow requirements and provided for relatively undiminished fluid flow therethrough while preventing flaking and the like. Hence, this netting supplements, enhances or increases the tensile strength of the filter medium 44 when wet. Generally, any type of netting or mesh may be used which is pervious to flow. It is preferred however to use a polymeric mesh or netting, e.g. polypropylene. It is also preferred to have a rigidized netting or mesh which forms parallel fluid flow channels tangential to the media. A filter material separator 46 is disposed between each of the two adjacent layers of filtration material 44. The separator 46 is utilised to prevent collapse of the filter cell in use and provide integrity to each individual filter cell while providing relatively unimpeded fluid flow therethrough. Further, it has been observed that for "dense" filter cell cartridges when cell-to-cell spacing is minimal, the netting 42 acts as a separator between adjacent cells and therefore aids in fluid flow along the surface.

Disposed between each cell is an inter filter cell spacer 48. The spacer 48 is preferably comprised of the same material as the retainer ring assembly 32. The spacer 48 has a plurality of annular recesses 50 and ridges 51 disposed on both sides. It is preferable that at least two ridges 51 are utilised (and hence two recesses 50) to form a fluid-tight seal between adjacent filtration material disposed on adjacent filter cells. Since the netting has a plurality of apertures therethrough, it has been found that two annular ridges are usually necessary to prevent migration of unfiltered fluid along the netting 42 into the central aperture or core 31.

A plurality of bands 52 engage slots 54 in the retainer ring assembly 32 and extend from the retainer ring assembly at one end to the retainer ring assembly at the other end and are used to form a rigid filter cell assembly 20. The bands 52 are preferably of stainless steel, although any other suitable material may be utilised. Further, it is possible to utilise a plurality of threaded bolts or the like extending through the filter cell assembly and suitably attached to the retainer ring assemblies 32 in order to form a rigid assembly.

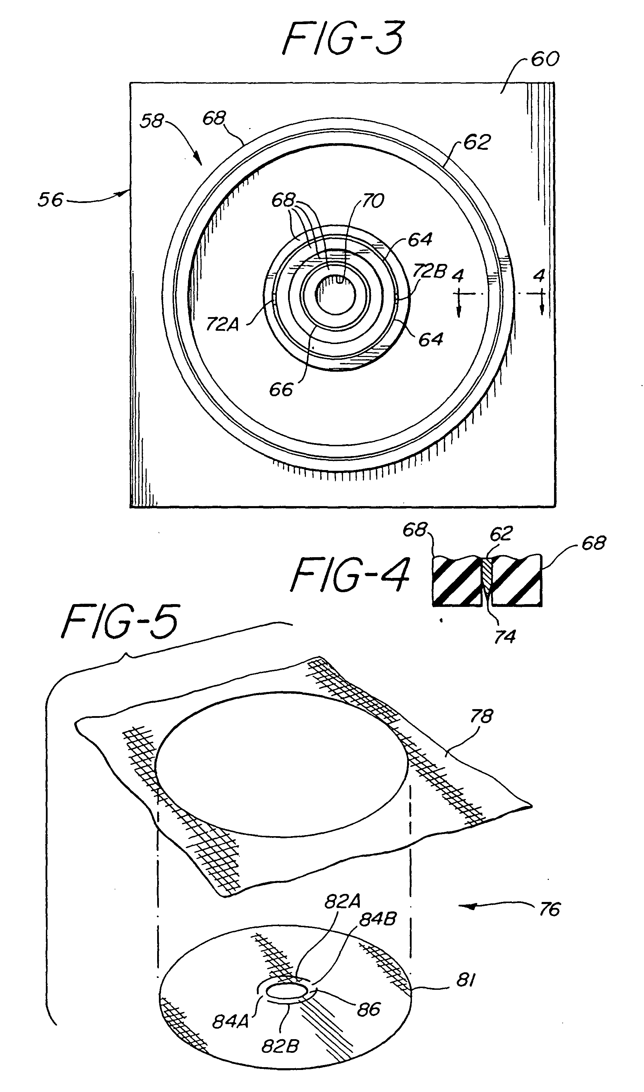

Referring now to Figure 3, there is shown a top view of a cutting die utilised in the manufacture of the described filter cell. A netting cutting die, indicated generally at 56 is utilised to cut netting 56 into the appropriate configuration. The cutting die 56 is comprised of a cutting area, shown generally at 58, disposed on a base 60. Three cutting blades are disposed on the base 60. An outer circumference cutting blade 62 is utilised to cut the outer diameter of the netting to the approximate size of the filter cell with which it is to be used. Radially inward is disposed an additional cutting blade, designated 64. Another blade is shown at 66 and is an inner circumference cutting blade. Disposed between adjacent blades are spacers 68 (shown more clearly in Figure 4) which are preferably of a sponge-type material to provide some backing to the netting during the cutting operation so that cutting is more uniform along the annual edge of the blade and to free the netting from the die after being cut. The inner circumference cutting blade has axially disposed therein a centring hole 70 which is used for alignment or registration purposes in cutting the netting. Several non-cutting portions, designated respectively as notches 72A, 72B are disposed on cutting blade 64. Each cutting blade is generally a thin sheet stock bent into an annular configuration having one end sharpened so as to form blade tip 74.

Referring to Figure 5, use of the cutting die 56 is more clearly illustrated via a representation of how 28. In the preferred embodiment of the present invention, the edge material is the same as retainer ring assembly 32 and inter filter cell spacer 48, although any other suitable type of material may be utilised. The press 100 remains closed until sufficient cooling of the injected material is accomplished after which time the mould is then separated and the filter cell removed from mandrel 102. The netting 80 thus becomes sealed to and/or an integral part of the edge seal 28.

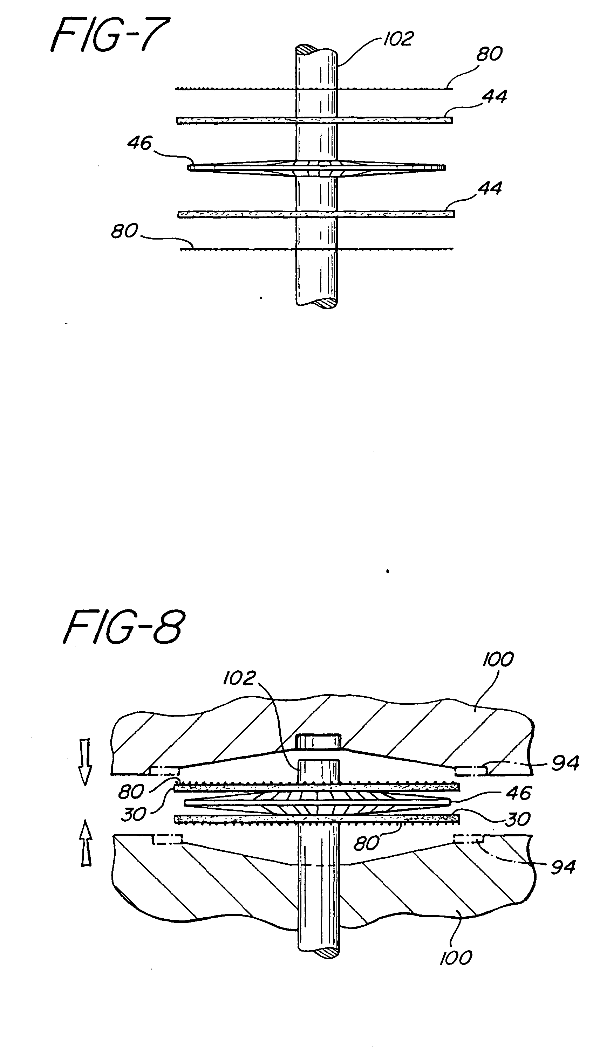

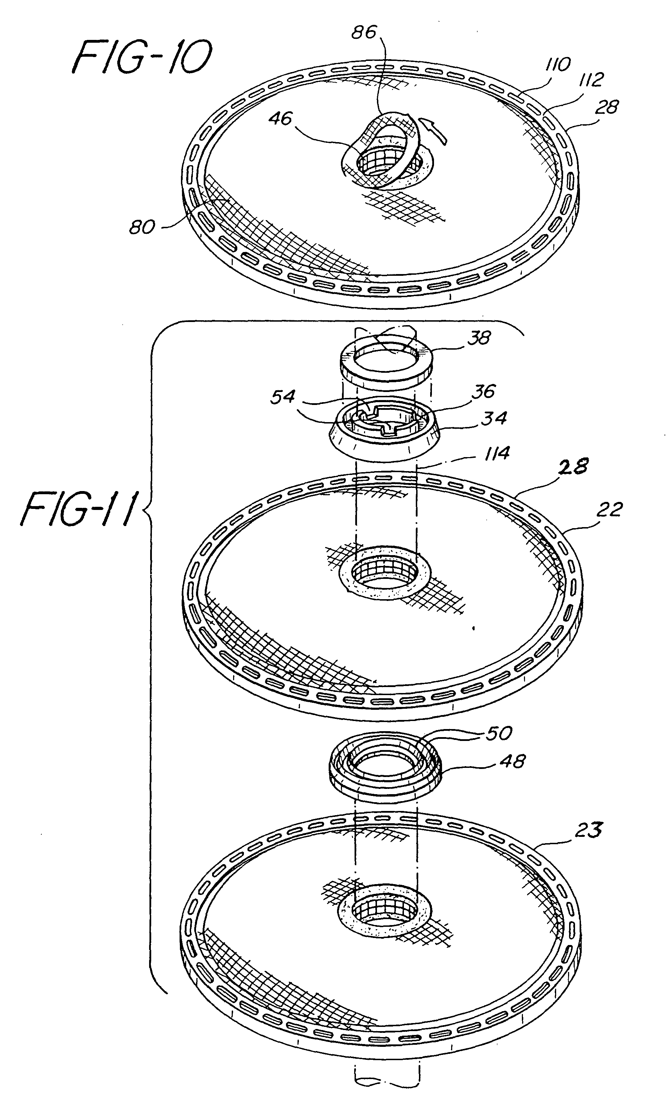

Referring now to Figures 10 and 11, final construction of a filter cell assembly is shown. The moulded edge 28 has a plurality of elongate slots of apertures 110 having spacer portions 112 disposed therebetween. After the moulding process shown by Figures 8 and 9, the plug 86 is removed as shown. In order to facilitate removal of the plug 86, netting notches 84A and 84B are utilised. Therefore it is possibly merely to pull on plug 86 in order to remove it from the netting 80 without performing a further cutting operation. The inner diameter of the plug 86 is only used for centring purposes about mandrel 102 during preliminary assembly steps and is removed prior to construction of the filter cell assembly 20.

Actual assembly of the filter cell assembly is accomplished by use of a filter assembly mandrel 114, which is utilised properly to align the various components in the filter cell assembly. An inter filter cell spacer 48 is placed between adjacent filter cells 22,24. On the outside of the end filter cells there is an end fitting 34 having a gasket 38 therein. Thereafter, the mandrel 114 is removed and the bands 52 are placed into slots 54, compressing the cells and components thereof thereby to form a rigid cohesive filter cell assembly structure 20 wherein retainer rings 34 and separators 48 are urged against the filter the netting utilised is cut. The netting blank is larger than the required area. The netting is placed onto the cutting die 56 thereby forming the appropriate cuts resulting in a number of portions. These portions include discard material 78 and filter netting 80 which is material that is actually used with the filter cell. The cutting blade 64 results in netting flaps 82A, 82B respectively, which remain attached to the netting via netting notches 84A, 84B. This therefore results in a frangible type of plug (or doughnut) 86. It has been found that it is necessary to produce the doughnut-like structure 86 in order to facilitate assembly of each filter cell. More particularly, the centre aperture is utilised to centre the netting with respect to the filtration material during the actual assembly.

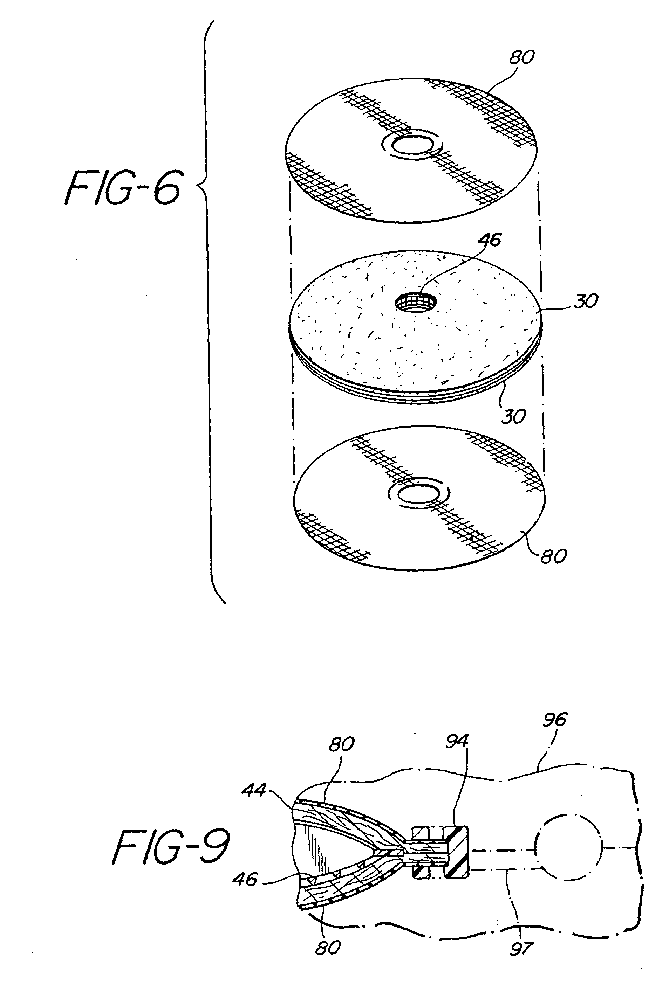

Referring to Figure 7, preliminary alignment and assembly of a filter cell is shown. More specifically, a cell assembly mandrel 102 is utilised to align the various components of a filter cell. Initially placed onto mandrel 102 is a filter material separator 46. On either side of separator 46 is the filtration material 44, followed by filter netting 80. This form the assembly shown in Figure 6 (without the mandrel 102).

Moulding of the edge 28 on each filter cell is accomplished as shown in Figures 8 and 9. There, a cell assembly press 100 disposed on mandrel 102 (or any other suitable or subsequent mandrel) and comprised of essentially two halves are axially urged along mandrel 102 towards each other until mated as shown in Figure 9. This causes the edge of netting 80 to be compressed against filtration material 44. A cavity, as part of injection mould 96 contained on cell assembly press 100, is configured so as to be in the shape of edge 28 along the annular edge of the compressed filter cell. Molten material is then injected through sprue 97 of die 96, and enters into cavity 94 so as to form edge media and netting thereby to seal the central core 31.

Referring now to Figures 12 and 13, top and cross-sectional views of filter netting 80 overlaid onto filtration material 44 are shown. The netting 80 may have a relatively smooth or planar undersurface to contact the filtration material 44 or may protrude into the filter media. Both types of netting minimise cracking, flaking and the like. The netting holds down the filtration material 44 to the maximum extent possible without impeding fluid flow therethrough.

Tests were conducted to compare the present invention with prior art filter cell designs. These tests produced the following results:

| Back Pressure Test | |
|---|---|
| Type of Cell | Burst Pressure (Kg/cm²) |
| Standard/Prior art | 0.105 - 0.210 (1.5 - 3.0 psi) |
| Reinforced with netting | 1.125 - 1.55 (16.0 - 22.0 psi) |

Further, while a number of different types of netting were tried, type no. XN 7020 manufactured by Conwed Plastics of Minneapolis, Minnesota, was found to produce the best results. However other types of netting produced by Conwed Plastics, such as part Nos. XN7025, XN4210, XN4700 and XN3900 are workable. The first two of these part numbers respectively performed most satisfactorily and had a strand configuration of 7 by 5 and a standard resin PP/PE blend. However, it is to be understood that other reinforced netting produced by other manufacturers is acceptable as individual circumstances dictate.

The embodiment described above may be modified without departing from the scope of the present invention. For example, the filter cells may be of different configurations, such as cylindrical, while different types of edge mechanisms may be utilised. Further, different types of material may be utilised while different methods of assembly may similarly be used. Additionally it would be possible to place netting on the interior of the filter cell adjacent the filtration material so as to prevent flaking, cracking and the like during filter operation without departing from the scope of the present invention.

The described improved cell-type filter cartridge has an injection-moulded edge which resiliently engages and holds reinforced netting tightly to the filter medium. The proposed manufacturing method allows the assembly of an improved filter cell cartridge which minimises leakage and produces an aesthetically improved filter cell which does not prematurely fail or aesthetically indicate failure. The filter cell is inexpensive but has improved the physical and aesthetic characteristics by the use of netting means which minimises the frequency at which the filter cell blinds or closes itself off while increasing mechanical and tensile strength as well as burst strength and the like.

## Claims

1. A sealing disk (34,48) for use with a filter cell having filter media (44) defining an external unfiltered fluid surface and an internal surface of the cell, the filter media being self-supporting internally of the cell and having reinforcing netting means (42,80) extending over the external surface of the filter media except for a central region of the cell, which sealing disk comprises a disk (38,48) having at least one radial surface for engaging, in use, said external surface of the filter cell, an aperture (31) disposed axially through the disk and a plurality of concentric sealing rings (51) extending from the radial surface, the concentric rings (51) being constructed and arranged sealingly to engage the external surface of the abutting filter media;
**characterised in that:**
the sealing disk further has a fastening ring also extending from the radial surface of the disk and concentrically disposed about the sealing rings, the fastening ring being spaced from the outer sealing ring (51) with an annular part (50) of the sealing disk extending in a radial plane between the outer sealing ring (51) and the fastening ring, whereby in use the inner periphery of the netting means is located against the annular part and the fastening ring engages the radially inner region of the netting means to secure said inner region to the external surface of the filter cell.

2. A sealing disk according to claim 1, wherein the fastening ring is disposed adjacent the outer periphery of the sealing disk (34,48).

3. A sealing disk according to claim 1 or claim 2, wherein said disk (48) has opposing radial surfaces.

4. A sealing disk according to claim 3, wherein said plurality of concentric sealing rings (51) and said fastening ring extend from each of the radial surfaces.

5. A sealing disk according to any of the preceding claims, wherein each of said sealing rings (51) is continuous.

6. A sealing disk according to any of the preceding claims, wherein each of said sealing rings (51) is triangularly-shaped in cross-section to form an engaging edge.

7. A filter cartridge comprising a plurality of filter cells arranged coaxially, each filter cell being defined by filter media (44) having an unfiltered fluid external surface and an internal surface, and sealing means between adjacent filter cells and on the unfiltered fluid surfaces at the ends of the assembly of cells, each of which sealing means is in the form of a sealing disk (34,48) having at least one radial surface for engaging radially-inner part of the external surface of the cell, there being an aperture (31) axially disposed through the disk and the disk having a plurality of concentric sealing rings (51) extending from the radial surface, the concentric rings (51) being constructed and arranged sealingly to engage the external surface of abutting filter media (44);
**characterised in that** the filter media is self supporting on the internal surfaces of the cell and reinforcing netting means (42,80) extends over the external surface of the filter media of each cell except for a central region of the external surface; **and in that** the sealing disk includes a fastening ring also extending from the radial surface of the disk and concentrically disposed about the plurality of sealing rings (51), the fastening ring being constructed and arranged to engage the reinforcing netting means (42,80) disposed on the filter media (44), to hold the radially inner region of the netting means and to secure said netting means to the external surface of the filter cell.

8. A filter cartridge according to claim 7, wherein the sealing disk (34,48) is compressed against the cell to secure the netting means (42,80) to the cell and sealingly to engage the filter media (44).

## Patentansprüche

1. Dichtungsscheibe (34, 48) zur Verwendung mit einer Filterzelle mit Filtermedien (44), die eine externe Oberfläche für ungefiltertes Fluid und eine interne Oberfläche der Zelle definieren, wobei die Filtermedien innen in der Zelle selbstunterstützend sind und verstärkende Netzeinrichtungen (42, 80) aufweisen, die über die externe Oberfläche der Filtermedien außer der zentralen Region der Zelle verlaufen, wobei die Dichtungsscheibe eine Scheibe (38, 48) mit wenigstens einer radialen Oberfläche zur Anlage, im Betrieb, an der externen Oberfläche der Filterzelle, eine Öffnung (31), die axial durch die Scheibe angeordnet ist, und eine Mehrzahl von konzentrischen Dichtungsringen (51) aufweist, die von der radialen Oberfläche vorstehen, wobei die konzentrischen Ringe (51) so aufgebaut und angeordnet sind, um dichtend an der externen Oberfläche der anliegenden Filtermedien anzuliegen,
**dadurch gekennzeichnet, dass**
die Dichtungsscheibe weiter einen Befestigungsring hat, der ebenfalls von der radialen Oberfläche der Scheibe vorsteht und konzentrisch zu den Dichtungsringen angeordnet ist, wobei der Befestigungsring auf Abstand zu dem äußeren Dichtungsring (58) liegt und ein ringförmiger Teil (55) der Dichtungsscheibe sich in einer radialen Ebene zwischen dem äußeren Dichtungsring (55) und dem Befestigungsring erstreckt, wodurch im Betrieb der innere Umfang der Netzeinrichtungen gegen den ringförmigen Teil angeordnet ist und der Befestigungsring an der radial inneren Region der Netzeinrichtungen anliegt, um die innere Region an der externen Oberfläche der Filterzelle festzusetzen.

2. Dichtungsscheibe nach Anspruch 1, wobei der Befestigungsring angrenzend an den äußeren Umfang der Dichtungsscheibe (34, 48) angeordnet ist.

3. Dichtungsscheibe nach Anspruch 1 oder 2, wobei die Scheibe (48) gegenüberliegende radiale Oberflächen hat.

4. Dichtungsscheibe nach Anspruch 3, wobei die mehreren konzentrischen Dichtungsringe (51) und der Befestigungsring von jeder der radialen Oberflächen vorstehen.

5. Dichtungsscheibe nach einem der vorhergehenden Ansprüche, wobei jeder der Dichtungsringe (51) durchgängig ist.

6. Dichtungsscheibe nach einem der vorhergehenden Ansprüche, wobei jeder der Dichtungsringe (51) im Querschnitt Dreiecksform hat, um eine Anlagekante zu bilden.

7. Filterpatrone mit einer Mehrzahl von Filterzellen, die koaxial angeordnet sind, wobei jede Filterzelle durch Filtermedien (44) mit einer externen Oberfläche für ungefiltertes Fluid und einer internen Oberfläche definiert ist, und mit Dichtungsmitteln, die zwischen benachbarten Filterzellen und an den Oberflächen für ungefiltertes Fluid an den Enden der Zellenanordnung liegen, wobei jedes Dichtungsmittel in Form einer Dichtungsscheibe (34, 48) vorliegt, die wenigstens eine radiale Oberfläche zur Anlage an einem radial innen liegenden Teil der externen Oberfläche der Zelle hat, wobei eine Öffnung (31) vorhanden ist, die axial durch die Scheibe angeordnet ist, und wobei die Scheibe eine Mehrzahl von konzentrischen Dichtungsringen (51) hat, die von der radialen Oberfläche vorstehen, wobei die konzentrischen Ringe (51) so aufgebaut und angeordnet sind, um dichtend an der externen Oberfläche der anliegenden Filtermedien (44) anzulegen,
**dadurch gekennzeichnet, dass** die Filtermedien an der inneren Oberfläche der Zelle selbstunterstützend sind und dass verstärkende Netzeinrichtungen (42, 80) sich über die externe Oberfläche der Filtermedien jeder Zelle, außer der zentralen Region der externen Oberfläche, erstrecken, und dass die Dichtungsscheibe weiter einen Befestigungsring hat, der ebenfalls von der radialen Oberfläche der Scheibe vorsteht und konzentrisch zu den Dichtungsringen angeordnet ist, wobei der Befestigungsring so aufgebaut und angeordnet ist, um an den auf den Filtermedien (44) angeordneten verstärkenden Netzeinrichtungen (42, 80) anzuliegen, um die radial innere Region der Netzeinrichtungen zu halten und die Netzeinrichtungen an der externen Oberfläche der Filterzelle festzusetzen.

8. Filterpatrone nach Anspruch 7, wobei die Dichtungsscheibe (34, 48) gegen die Zelle zusammengedrückt ist, um die Netzeinrichtungen (42, 80) an der Zelle festzusetzen und um dichtend an den Filtermedien (44) anzuliegen.

## Revendications

1. Bague d'étanchéité (34, 48) destinée à être utilisée avec une cellule filtrante possédant un médium filtrant (44) définissant une surface extérieure pour le fluide non filtré et une surface intérieure de la cellule, le médium filtrant étant autoporteur à l'intérieur de la cellule et possédant des moyens (42, 80) à filet de renforcement s'étendant sur la surface extérieure du médium filtrant à l'exception d'une région centrale de la cellule, la bague d'étanchéité comprenant une bague (38, 48) ayant au moins une surface radiale pour s'appuyer, en service, sur ladite surface extérieure de la cellule filtrante, une ouverture (31) disposée axialement à travers la bague et plusieurs anneaux d'étanchéité concentriques (51) partant de la surface radiale, les anneaux concentriques (51) étant conçus et agencés pour prendre appui étanche sur la surface extérieure du médium filtrant formant butée ;
**caractérisée en ce que** :
la bague d'étanchéité possède en outre un anneau de retenue partant aussi de la surface radiale de la bague et disposé concentriquement autour des anneaux d'étanchéité, l'anneau de retenue étant espacé de l'anneau d'étanchéité extérieur (51), une partie annulaire (50) de la bague d'étanchéité s'étendant dans un plan radial entre l'anneau d'étanchéité extérieur (51) et l'anneau de retenue, de sorte qu'en service la périphérie intérieure des moyens à filet est située contre la partie annulaire et l'anneau de retenue s'appuie sur la région radialement intérieure des moyens à filet pour fixer ladite région intérieure à la surface externe de la cellule filtrante.

2. Bague d'étanchéité selon la revendication 1, dans laquelle l'anneau de retenue est disposé adjacent à la périphérie extérieure de la bague d'étanchéité (34, 48).

3. Bague d'étanchéité selon la revendication 1 ou 2, dans laquelle ladite bague (48) possède des surfaces radiales opposées.

4. Bague d'étanchéité selon la revendication 3, dans laquelle lesdits plusieurs anneaux d'étanchéité concentriques (51) et l'anneau de retenue partent de chacune des surfaces radiales.

5. Bague d'étanchéité selon l'une quelconque des revendications précédentes, dans laquelle chacun desdits anneaux d'étanchéité (51) est continu.

6. Bague d'étanchéité selon l'une quelconque des revendications précédentes, dans laquelle chacun desdits anneaux d'étanchéité (51) est de forme triangulaire en coupe transversale, pour former un bord d'appui.

7. Cartouche filtrante comprenant plusieurs cellules filtrantes agencées coaxialement, chaque cellule filtrante étant définie par un médium filtrant (44) ayant une surface externe pour le fluide non filtré et une surface interne, et des moyens d'étanchéité entre cellules filtrantes adjacentes et sur les surfaces pour le fluide non filtré aux extrémités de l'assemblage de cellules, chacun de ces moyens d'étanchéité étant sous la forme d'une bague d'étanchéité (34, 48) possédant au moins une surface radiale pour s'appuyer sur une partie radialement intérieure de la surface externe de la cellule, une ouverture (31) étant disposée axialement à travers la bague et la bague possédant plusieurs anneaux d'étanchéité concentriques (51) partant de la surface radiale, les anneaux concentriques (51) étant conçus et agencés pour venir en appui étanche avec la surface externe du médium filtrant (44) formant butée ;
**caractérisé en ce que** la médium filtrant est auto-portant sur les surfaces internes de la cellule et des moyens à filet de renforcement (42, 80) s'étendent sur la surface externe du médium filtrant de chaque cellule sauf pour une région centrale de la surface externe ; et en ce que la bague d'étanchéité comprend un anneau de retenue partant aussi de la surface radiale de la bague et disposé concentriquement autour des plusieurs anneaux d'étanchéité (51), l'anneau de retenue étant conçu et agencé pour s'appuyer sur les moyens à filet de renforcement (42, 80) disposés sur le médium filtrant (44), pour retenir la région radialement intérieure des moyens à filet et pour fixer les moyens à filet à la surface externe de la cellule filtrante.

8. Cartouche filtrante selon la revendication 7, dans laquelle la bague d'étanchéité (34, 48) est comprimée contre la cellule pour fixer les moyens à filet (42, 80) à la cellule et pour prendre appui étanche avec le médium filtrant (44).
